(19) **Europäisches Patentamt**

**European Patent Office** (11) Publication number: **0 119 673**

**Office européen des brevets** **B1**

(12) **EUROPEAN PATENT SPECIFICATION**

(45) Date of publication of patent specification: **08.06.88** (51) Int. Cl.⁴: **G 01 L 1/20, G 01 L 1/14, H 01 C 10/10, H 01 G 5/24**

(21) Application number: **84300018.3**

(22) Date of filing: **03.01.84**

(54) **Transducers.**

<table>
<tr><td>

(30) Priority: **03.01.83 US 455443**

(43) Date of publication of application:
**26.09.84 Bulletin 84/39**

(45) Publication of the grant of the patent:
**08.06.88 Bulletin 88/23**

(84) Designated Contracting States:
**CH DE FR GB IT LI NL SE**

(56) References cited:
**CH-A- 549 207**
**DE-A-2 300 837**
**DE-A-2 513 785**
**DE-A-2 727 221**
**DE-A-3 006 678**
**DE-B-1 299 441**
**DE-B-2 556 947**
**GB-A-1 562 766**
**US-A-3 328 653**
**US-A-3 693 059**
**US-A-3 781 751**
**US-A-4 314 227**

</td><td>

(73) Proprietor: **ILLINOIS TOOL WORKS INC.**
**8501 West Higgins Road**
**Chicago Illinois 60631 (US)**

(72) Inventor: **Froeb, John Wildermuth**
**713 South Boulevard**
**Evanston Illinois 60202 (US)**
Inventor: **Engstrom, Keith Allen**
**12 Lexington Road**
**Barrington Illinois 60010 (US)**

(74) Representative: **Gordon, Michael Vincent et al**
**GILL JENNINGS & EVERY 53-64 Chancery Lane**
**London WC2A 1HN (GB)**

</td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention is directed to transducers, by which is meant devices which are capable of sensing an amount of applied force, converting that force to an output of a different type of energy, and transmitting that output for further processing and evaluation to indicate the amount of said force present at any given particular time, the present invention being more particularly concerned with transducers for indicating changes of an applied physical force by changes in an electrical property.

The present transducers are designed to overcome some of the shortcomings of the invention disclosed in our U.K. patent application No: 8320372 which claims priority from our U.S. patent application No: 404,266 (GB—A—2124777 published 22 Feb 1984).

In our above-noted earlier invention, it was a major and economically significant shortcoming that electrical coupling had to be maintained in order that current could flow through the transducer. Moreover, a given amount of electrical coupling could not be repeatable except with complex and consequently expensive mechanical balancing apparatus. This meant that there was no easy way to ensure that an electronic indication (such as a dot on a cathode ray tube) would start from a desired "zero" position upon application of force to the transducer. In other words, the transducer could not be easily adjusted because the position of the electronic indication could not be seen unless a current was flowing, but· any particular current flow could not be achieved without great difficulty.

It is also known from US—A—3,781,751 to provide a battery charger with a pressure responsive transducer for use in controlling the charging rate by the gas pressure developed in the battery being charged. The pressure transducer includes a resistance element connected to terminals and spaced from a flexible diaphragm, which itself includes a layer of elastomeric material and a separate overlying layer of plastics material adhered to a layer of electrically conductive material. As pressure is applied to the elastomeric material, if deflects the plastics material and brings a central part of the electrically conductive material into contact with the resistance element. As the pressure increases, more of the electrically conductive material is urged against the resistance element to provide an electrical shunt and thus gradually reduce the electrical resistance between the terminals. The elastomeric material of the flexible diaphragm is spatially separated from the electrically conductive material by the intervening plastics material which is not formed with or fixed to the elastomeric material.

In accordance with the present invention, a transducer for indicating changes of an applied physical force by changes in an electrical property comprises a first means having first electrical properties and a second means having second electrical properties, the second means being located adjacent to the first means and being responsive to an applied physical force to be moved into a progressively increasing area of electrical coupling with the first means to give a progressively increasing variance in the electrically coupled electrical properties, and the first means being connected within an electrical circuit so that an electrical potential difference is connected across the first means regardless of whether or not the first means is electrically coupled with the second means, whereby the second means is an elastomeric actuator in the form of a shaped body with an electrically conductive. outer surface which is either formed with or fixed to the elastomeric actuator.

The most significant consequence of the change to intra-layer current flow in which the current flows through the transducer continually, from the inter-layer arrangement of our above-noted earlier invention in which the current flows through the transducer only when there is electrical coupling, is that removal of an applied physical force from the transducer still results in a visual indicator dot on a CRT or other electronic indicators. The position of the indicator dot can clearly be readily adjusted as appropriate, and the resistivity or other electrical property of the transducer in the at-rest position is known and is repeatably predictable and is easily adjusted or trimmed to be in balance in such applications as a joystick, which would employ a plurality of the transducers to allow electronic indication in two or more dimension.

Transducers in accordance with the present invention can: be simple in construction; provide reliability and durability in operation; be inexpensive to construct; be capable of a wide range of commercial applications with few, if any, variations in construction; be capable of. operating resistively, capacitively or inductively with minimal changes in structural details; and have the ability to self-zero electrical output upon removal of applied physical force, the self-zeroing being repeatably predictable.

Several transducers in accordance with the persent invention, and several transducers which are not in accordance with the present invention but are of general background interest, will now be described, by way of example only, with reference to the accompanying drawings, in which:—

Figure 1 is a side view of a schematic section through a transducer;

Figure 2 is a top plan view of the resistive element on the rigid substrate of Figure 1;

Figure 3 is a side view of a schematic section through a first transducer embodying the present invention;

Figure 4 is a side view of a schematic section through another transducer;

Figure 5 is a top plan view of the resistive element on the rigid substrate of Figure 4;

Figure 6 is a side view of a schematic section through a second transducer embodying the present invention;

Figure 7 is a side schematic section illustrating the inter-action of the elements carried on the flexible substrate and on the fixed substrate in reaction to application of a force to the flexible substrate of Figure 1;

Figure 8 is a top plan view showing four transducers of the present invention incorporated in a circuit board for a joystick controller device;

Figure 9 is a schematic view of a third transducer embodying the present invention showing an inter-digitated fixed capacitor as it would appear in top plan view on a printed circuit board, with representations indicating various areas of capacitive coupling which would be made by depressing a flexible substrate downwards onto the inter-digitated printed capacitor; and

Figure 10 is a side view of a schematic partial section taken along the line 10—10 of Figure 9.

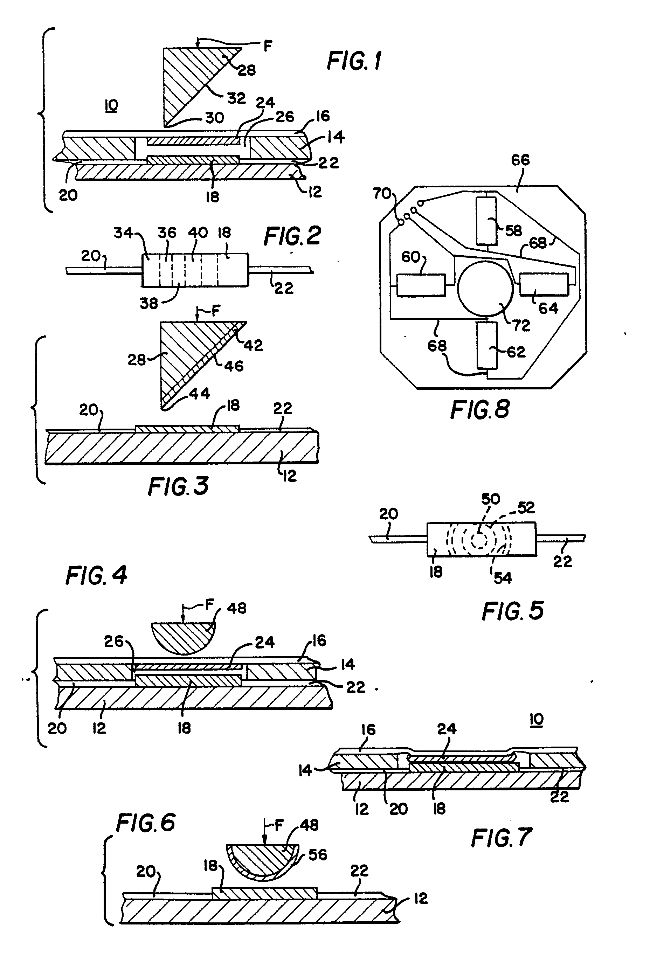

The transducer 10, falling outside the scope of the present invention and shown in Figure 1, comprises a non-conductive rigid substrate 12, a spacer 14 of a non-conductive material, and a non-conductive resiliently flexible substrate 16. Affixed to the rigid substrate 12 is a resistive land or area 18 which is electrically connected to conductors 20 and 22. The resistive area 18 and the conductors 20 and 22 are formed by an electrically propertied ink which is silkscreened on the rigid substrate 12. A similar land or resistive area 24 is affixed in a similar manner to the flexible substrate 16. The resistive area 18 and the resistive area 24 are in register with each other and with an aperture 26 in the spacer 14 so that electrical contact can be effected between the resistive area 18 and the resistive area 24, through the aperture 26, when a force F is applied to the flexible substrate 16 in the vicinity of the resistive area 24 urging the flexible substrate 16 carrying the resistive area 24 towards the rigid substrate 12. An actuator 28 is located in register with the aperture 26 and provides a means for application of the force F to urge the flexible substrate 16 carrying the resistive area 24 towards the rigid substrate 12 and its resistive area 18. The actuator 28 is constructed of elastomeric material in order to provide the desired interaction between the resistive areas 18 and 24 as the force F is increased, as will be discussed later.

Figure 2 illustrates in top plan view the resistive area 18 and its associated conductors 20 and 22. As the force F is increased urging the actuator 28 against the flexible substrate 16, the flexible substrate 16 moves towards the rigid substrate 12. The actuator 28, is wedge-shaped (and thus polygonal) in cross-section as illustrated in Figure 1 and is oriented so that a corner 30 of the actuator 28 is first to engage the flexible substrate 16 upon application of sufficient force F. Sloping face 32 of the actuator 28 is progressively brought into contact with the flexible substrate 16 as the force F is increased, as will be discussed hereinafter. As the force F is increased upon the actuator 28, the corner 30 of the actuator 28 engages the flexible substrate 16 and urges the flexible substrate 16 towards the rigid substrate 12. This urging of the flexible substrate 16 towards the rigid substrate 12 will result in electrical contact being established between the resistive areas 18 and 24, the first area of such contact occurring in the vicinity of the corner 30 as indicated at 34 in Figure 2. As the force F is further increased, the elastomeric actuator 28, through its sloping face 32 rotating about the corner 30 as a fulcrum, will progressively bring further portions of resistive areas 18 and 24 into similar electrical contact as indicated at 36, 38 and 40 in Figure 2.

The resistive area 24 is relatively more conductive (i.e. less resistive) than the resistive area 18. The consequence of such progressive and increased electrical contact with progressive and increased application of force F is best explained by referring to Figure 7. In Figure 7 the resistive area 18 is shown affixed to the rigid substrate 12 with its associated conductors 20 and 22. Further the spacer 14, the flexible substrate 16 and its associated resistive area 24 are also shown in side section schematic view. Figure 7 illustrates the condition of the transducer 10 with sufficient force applied to an actuator to fully compress and to fully effect electrical connection between the resistive areas 18 and 24. The current path experienced by the transducer 10 in such a condition would, for instance, pass through conductor 20 into resistive area 18, immediately shunting to the less resistive (relatively more conductive) resistive area 24, continuing to pass through the path of least resistance in resistive area 24 as long as resistive area 18 and resistive area 24 remain in electrical contact, thence returning to resistive area 18 and continuing from resistive area 18 through conductor 22 to further circuit elements (not shown). Thus the effective resistance of resistive area 18 is lowered by shunting current through the electrical connection between resistive area 18 and resistive area 24 into the less resistive (relatively more conductive) path of resistive area 24 for a current path, the length of which is determined by and, therefore, proportional to the amount of force F urging the flexible substrate with its resistive area 24 into electrical contact with resistive area 18, which electrical contact is progressively increased with progressive increases of force F, as illustrated by Figure 2.

Figure 3 illustrates an embodiment of the present invention. In Figure 3 elements similar to those disclosed in Figure 1 are given similar reference numbers. In Figure 3 an elastomeric actuator 28 is urged by force F towards a rigid substrate 12 on which is affixed a resistive area 18 and its associated conductors 20 and 22. Carried upon and bonded to the actuator 28 is a conductive area 42. Of course, the entire actuator 28 could be formed of elastomeric conductive material. With increased force F the actuator 28 is urged towards the rigid substrate 12, first contacting the resistive area 18 with corner 44 of the conductive area 42. Sloping face 46 of the conductive area 42 will, with progressively increased force F, experience progressively increased electrical contact with the resistive area 18 in a manner similar to that illustrated by Figure 2. The shunting of current and its consequential effective reduction of resistivity of resistive area 18 will be similar to the illustration of Figure 7 except that no flexible substrate 16, no spacer 14 and no resistive area 24 would be necessary to effect operation. Current flow would occur through conductor 20 into resistive area 18, then shunting into the conductive area 42 for as long a path as conductive area 42 and resistive area 18 are in electrical connection, which path is proportional in length to the amount of force F applied to the actuator 28, thence returning to the resistive area 18 and continuing from the resistive area 18 through the conductor 22 to further electronic components in the circuit (not shown).

Figure 4 illustrates another transducer, like elements to those disclosed in Figure 1 again being given like reference numbers in Figure 4. Thus, in Figure 4, a rigid substrate 12 has affixed thereto a resistive area 18 and its associated conductors 20 and 22. A flexible substrate 16 is maintained in spaced relation from the rigid substrate 12 by a spacer 14. Affixed to the flexible substrate 16 is a resistive area 24, which resistive area 24 is relatively less resistive (i.e. more conductive) than resistive area 18. An elastomeric actuator 48 of generally hemispherical configuration is positioned in register with resistive areas 24 and 18 and an aperture 26 in spacer 14 allowing the elastomeric actuator 48 to move in response to a force F urging the actuator 48 against the flexible substrate 16, which flexible substrate 16 carrying its resistive area 24 will move in response to the force F via the actuator 48 towards the rigid substrate 12 and its resistive area 18. The physical and electrical operation of this alternative transducer are similar to the transducer disclosed in Figures 1, 2 and 7 except that, as illustrated in Figure 5, the progressively increased areas of electrical contact 50, 52 and 54 with increased application of force F to the actuator 48 are generally circular in configuration rather than generally linear in configuration as are contact areas 34, 36, 38 and 40 of Figure 2. Electrical shunting of current and the consequent reduction of effective resistivity of resistive area 18 occur in substantially the same manner as previously discussed with respect to Figure 7.

Figure 6 illustrates in side section a schematic view of another embodiment of the present invention, which embodiment is analogous to that illustrated in Figure 3. In Figure 6 a rigid substrate 12 has affixed thereto a resistive area 18 with its associated conductors 20 and 22. An actuator 48 responsive to a force F carries thereon a conductive layer 56. Of course the entire actuator 48 could be formed of conductive material. Application of force F urging the actuator 48 and its associated conductive layer 56 towards resistive area 18 will result in contact areas such as shown in Figure 5 at 50, 52 and 54 with consequent electrical current shunting and effective reduction of resistivity of resistive area 18 as previously discussed in association with Figure 7.

Figure 8 illustrates in top plan view a practical application of the present invention to a circuit board for a jojstick controller. Transducers 58, 60, 62 and 64 are carried upon a rigid substrate 66 and connected by various conductors 68 to form a voltage divider circuit which begins and terminates at terminals 70. The mounting of an actuator carrier (not shown) in an aperture 72 in a manner whereby a plurality of actuators (not shown) are situated in register with the transducers 58, 60, 62 and 64 provides a device particularly adapted for use as a joystick controller which operates to provide a signal indicative of position of the common actuator carrier in two dimensions. Such indication would be analog and would be reflective of the various progressively increasing or decreasing areas of electrical contact as the individual actuators on the common actuator carrier experience various combinations of two dimensional displacements. In the most beneficial embodiment of such a joystick controller, the common actuator carrier with its associated individual actuators would be in a non-contacting orientation with respect to each of the individual transducers 58, 60, 62 and 64 when in an at-rest centered condition. The various transducers could be electrically trimmed to ensure that the indicator dot on a CRT, or other appropriate electrical indicator, showing the position of the joystick would be centered or zeroed when the joystick is in its at-rest, non-contacting position. This zeroing or centering of the electrical indicator is repeatably attainable since current can flow continually through the transducers 58, 60, 62 and 64 even when the joystick controller is in its at-rest, or non-contacting orientation. The circuit thus returns to its previously adjusted or trimmed zero position each and every time that the common actuator carrier returns to its physical zero position.

Z-axis indication could be accomplished wiht such a joystick controller by including a fifth transducer actuated by a concentrically operated actuator located on the common actuator carrier or in some other manner, thereby adding a third dimension to the capability of control of such a joystick controller. It is worthy of note that this third dimension capability would likewise be analog in nature.

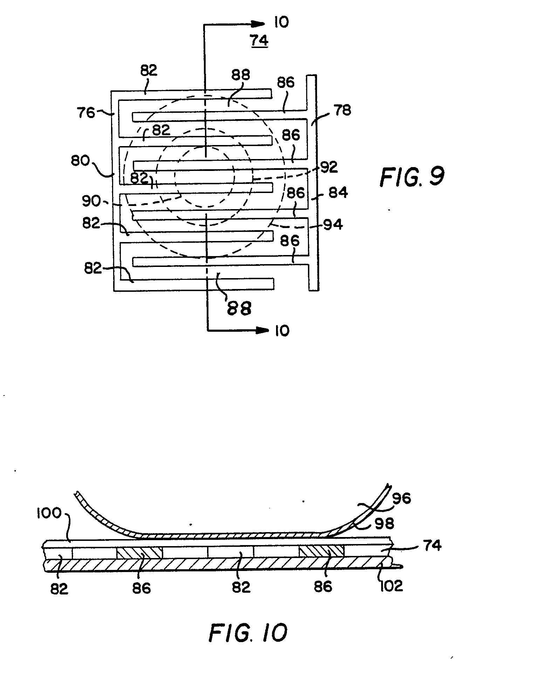

Figure 9 illustrates a further alternative embodiment of the present invention utilizing a capacitive property. In Figure 9 an interdigitated fixed capacitor 74 is shown. The fixed capacitor 74 includes two elements 76 and 78. The capacitive element 76 has a base section 80 and integral fingers 82 depending from the base 80 generally perpendicular to the base 80. The capacitive element 78 has a base 84 and integrally formed generally perpendicular fingers 86. The fingers 82 and 86 are oriented in alternating configuration providing therebetween gaps 88. Thus it can be seen from Figure 9 that this interdigitated orientation of capacitive elements 76 and 78 forms a fixed capacitor which can be screened, etched or in some other manner affixed to a rigid substrate such as printed circuit board 102 in Figure 10. If an actuator such as actuator 96 in Figure 10, which actuator has a generally hemispherical shape and a conductive layer 98 affixed thereto, were to be urged towards the capacitor 74 with a dielectric overlayer 100, as shown in Figure 10, in a manner similar to other embodiments illustrated heretofore, progressively increasing areas of capacitive coupling 90, 92 and 94 would be established between the conductive layer 98 and the capacitor 74 as increased force F urged the actuator 96 into increasingly generally parallel relationship with the capacitor 74. These increased areas of capacitive coupling 90, 92 and 94 would result in capacitive variance of increasing pairs of the fingers 82 and 86 of the capacitor 74, thereby effectively varying the capacitance of the capacitor 74 in response to variance of the force F. Thus, the electrical property of capacitance would be varied proportionally with the force F applied to the actuator 96 in the embodiment of Figures 9 and 10.

**Claims**

1. A transducer for indicating changes of an applied physical force by changes in an electrical property comprising a first means (18; 74) having first electrical properties and a second means (42; 56; 98) having second electrical properties, the second means being located adjacent to the first means and being responsive to an applied physical force (F) to be moved into a progressively increasing area of electrical coupling with the first means to give a progressively increasing variance in the electrically coupled electrical properties, and the first means (18; 74) being connected within an electrical circuit (20, 22) so that an electrical potential difference is connected across the first means (18; 74) regardless of whether or not the first means (18; 74) is electrically coupled with the second means (42; 56; 98), whereby the second means is an elastomeric actuator (28; 48; 96) in the form of a shaped body with an electrically conductive outer surface which is either formed with or fixed to (42; 56; 98) the elastomeric actuator.

2. A transducer according to claim 1, characterised in that the first means (74) is capacitive.

3. A transducer according to claim 2, characterised in that the first means is an inter-digitated (82, 86) fixed capacitor on a printed circuit board (102).

4. A transducer according to claim 2 or claim 3, characterised in that a dielectric means (100) is positioned between the first means (74) and the second means (98), the capacitance of the first means being effectively varied as the second means is increasingly brought into substantially parallel, capacitively coupled, relationship with the first means when the applied physical force (F) moves the second means into an increasing area of electrical coupling with the first means.

5. A transducer according to claim 1, characterised in that the first means is a resistive land (18) on a rigid non-conductive substrate (12), and is electrically connected to conductive paths (20, 22) on the rigid substrate (12) whereby resistivity of the resistive land (18) is progressively effectively reduced as the applied physical force (F) increasingly urges the second means (42; 56) into a greater area of electrical contact with the resistive land (18).

6. A transducer according to claim 5, characterised in that the actuator is formed of elastomeric conductive material.

7. A transducer according to claim 5, characterised in that the actuator is formed of an elastomeric material with a flexible layer (42; 56) of conductive material bonded thereto.

8. A transducer according to any one of claims 5 to 7, characterised in that the actuator is either generally polygonal (28) or generally hemispherical (48; 96) in cross-section.

9. A transducer according to any preceding claim, characterised by being in combination with one or more further transducers (58, 60, 62, 64), a rigid carrier, and a control stick, the elastomeric actuators and the control stick being attached to the rigid carrier, and the plurality of transducers being electrically connected to provide an electrical output signal proportional to the multi-dimensional position of the control stick.

**Patentansprüche**

1. Kraftwandler zur Anzeige von Änderungen einer aufgebrachten physikalischen Kraft auf der Basis von Änderungen einer elektrischen Eigenschaft, mit einer ersten Vorrichtung (18; 74) mit ersten elektrischen Eigenschaften und einer zweiten Vorrichtung (42; 56; 98) mit zweiten elektrischen Eigenschaften, wobei die zweite Vorrichtung (42; 56; 98) benachbart zu der ersten angeordnet ist und auf eine aufgebrachte physikalische Kraft (F) ansprechend sich in eine allmählich vergrössernde Zone elektrischer Kopplung zu der ersten Vorrichtung bewegt, was in einer allmählich wachsenden Änderung der elektrisch gekoppelten elektrischen Eigenschaften resultiert und wobei die erste Vorrichtung (18; 74) mit einer elektrischen Schaltung (20, 22) verbunden ist, so daß eine elektrische Potentialdifferenz an der ersten Vorrichtung (18; 74) liegt unabhängig davon, ob die erste Vorrichtung (18; 74) mit der zweiten Vorrichtung (42; 56; 98) elektrisch gekoppelt ist oder nicht und wobei die zweite Vorrichtung ein geformter, elastomerer Bedienungskörper (28; 48; 96) ist mit einer elektrisch Leitenden äußeren Fläche, die entweder mit dem elastomeren Bedienungskörper (42, 56; 98) zusammen geformt oder an diesen befestigt ist.

2. Kraftwandler nach Anspruch 1, dadurch gekennzeichnet, daß die erste Vorrichtung (74) kapazitiv ist.

3. Kraftwandler nach Anspruch 2, dadurch gekennzeichnet, daß die erste Vorrichtung ein aufgefächerter (82, 86) Kondensator ist, der auf einer gedruckten Schaltung (102) befestigt ist.

4. Kraftwandler nach den Ansprüche 2 oder 3, dadurch gekennzeichnet, daß ein Dielektrikum (100) zwischen der ersten (74) und der zweiten Vorrichtung (98) angeordnet ist, wobei die Kapazität der ersten Vorrichtung in dem Maße entscheidend verändert wird, in dem die zweite Vorrichtung zunehmend in eine weitgehend parallele, kapazitiv gekoppelte Anordnung mit der ersten Vorrichtung gebracht wird, wenn die aufgebrachte physikalische Kraft (F) die zweite Vorrichtung in einem wachsenden Bereich elektrischer Kopplung mit der ersten Vorrichtung bewegt.

5. Kraftwandler nach Anspruch 1, dadurch gekennzeichnet, daß die erste Vorrichtung aus einem Widerstandssteg (18) auf einem nichtleitenden starren Substrat besteht, wobei der Steg (18) elektrisch mit Strompfaden (20, 22) auf dem Substrat verbunden ist, wodurch der Widerstand des Steges in dem Maße allmählich effektiv verringert wird, in dem die aufgebrachte physikalische Kraft (F) die zweite Vorrichtung (42; 56) in einem zunehmenden elektrischen Kontakt mit dem Widerstandssteg (18) drückt.

6. Kraftwandler nach Anspruch 5, dadurch gekennzeichnet, daß der Bedienungskörper aus elastomerem leitendem Material besteht.

7. Kraftwandler nach Anspruch 5, dadurch gekennzeichnet, daß das Bedienungselement aus elastomerem Material und einer damit verbundenen flexiblen Schicht (42; 56) aus leitendem Material besteht.

8. Kraftwandler nach einem der Ansprüche 5 bis 7, dadurch gekennzeichnet, daß das Bedienungselement einen im großen und ganzen vieleckigen (28) oder halbkugelförmigen (48; 96) Querschnitt aufweist.

9. Kraftwandler nach einem der vorhergehenden Ansprüche, dadurch gekennzeichnet, daß er mit einem oder mehreren weiteren Kraftwandlern (58, 60, 62, 64) verbunden ist, einen starren Träger und eine längliche Steuervorrichtung aufweist, wobei die elastomeren Bedienungselemente und die längliche Steuervorrichtung an dem starren Träger befestigt sind und die Mehrheit der Kraftwandler elektrisch miteinander verbunden ist, um ein elektrisches Ausgabesignal proportional zur multidimensionellen Stellung der Steuervorrichtung zu erzeugen.

## Revendications

1. Transducteur pour indiquer, par des variations d'une propriété électrique, des variations d'une force physique appliquée, comprenant des premiers moyens (18; 74) ayant des premières propriétés électriques et des seconds moyens (42; 56; 98) ayant des secondes propriétés électriques, les seconds moyens étant placés de façon à être adjacents aux premiers moyens et, en réponse à une force physique appliquée (F), établissant une zone progressivement croissante de couplage électrique avec les premiers moyens pour introduire une variation progressivement croissante dans les propriétés électriques couplées électriquement, et les premiers moyens (18; 74) étant connectés dans un circuit électrique (20, 22) de manière qu'une différence de potentiel électrique soit appliquée aux bornes des premiers moyens (18; 74), que les premiers moyens (18; 74) soient couplés électriquement ou non aux seconds moyens (42; 56; 98), les seconds moyens comprenant un actionneur élastomérique (28; 48; 96) sous la forme d'un corps façonné présentant une surface extérieure électriquement conductrice qui est soit formée avec, soit fixée à (42; 56; 98) l'actionneur élastomérique.

2. Transducteur selon la revendication 1, caractérisé en ce que les premiers moyens (74) sont capacitifs.

3. Transducteur selon la revendication 2, caractérisé en ce que les premiers moyens comprennent un condensateur fixe imbriqué (82, 86) sur une plaquette (102) à circuit imprimé.

4. Transducteur selon la revendication 2 ou la revendication 3, caractérisé en ce qu'un moyen diélectrique (100) est placé entre les premiers moyens (74) et les seconds moyens (98), la capacité des premiers moyens variant effectivement lorsque les seconds moyens sont amenés de façon croissante en couplage capacitif, sensiblement en parallèle, par rapport aux premiers moyens, quand la force physique appliquée (F) fait croître la zone de couplage électrique des seconds moyens avec les premiers moyens.

5. Transducteur selon la revendication 1, caractérisé en ce que les premiers moyens comprennent une piste résistive (18) sur un substrat rigide non conducteur (12), et sont connectés électriquement à des chemins conducteurs (20, 22) sur le substrat rigide (12) afin que la résistivité de la piste résistive (18) soit réduite progressivement et effectivement lorsque la force physique appliquée (F) pousse de façon croissante les seconds moyens (42; 56) en contact électrique sur une plus grande zone avec la piste résistive (18).

6. Transducteur selon la revendication 5, caractérisé en ce que l'actionneur est formé d'une matière conductrice diastomérique.

7. Transducteur selon la revendication 5, caractérisé en ce que l'actionneur est formé sur une matière élastomérique à laquelle une couche flexible (42; 56) de matière conductrice est liée.

8. Transducteur selon l'une quelconque des revendications 5 à 7, caractérisé en ce que l'actionneur est de section transversale soit globalement polygonale (28), soit globalement hémisphérique (48; 96).

9. Transducteur selon l'une quelconque des revendications précédentes, caractérisé en ce qu'il est combiné à un ou plusieurs autres transducteurs (58, 60, 62, 64), à un support rigide et à une manette de commande, les actionneurs élastomériques et la manette de commande étant reliés au support rigide, et les transducteurs étant connectés électriquement de façon à produire un signal électrique de sortie proportionnel à la position dans plusieurs dimensions de la manette de commande.

FIG.1

FIG.2

FIG.3

FIG.4

FIG.5

FIG.6

FIG.7

FIG.8

1

FIG. 9

FIG. 10

2